# EUROPÄISCHE PATENTSCHRIFT

(11) **EP 3 807 079 B1**
(45) Veröffentlichungstag und Bekanntmachung des Hinweises auf die Patenterteilung: **27.07.2022**
(21) Anmeldenummer: 19730318.3
(22) Anmeldetag: 11.06.2019
(51) Int. Cl.: B29C 65/04, B29K 27/06, B29K 75/00

(54) **ROLLENELEKTRODENANORDNUNG, VORRICHTUNG UMFASSEND EINE ROLLENELEKTRODENANORDNUNG SOWIE VERFAHREN ZUR BEAUFSCHLAGUNG ZWEIER KUNSTSTOFF-ABSCHNITTE MIT EINEM HOCHFREQUENTEN ELEKTRISCHEN WECHSELFELD**
ROLLER ELECTRODE ARRANGEMENT, APPARATUS COMPRISING A ROLLER ELECTRODE ARRANGEMENT, AND METHOD FOR APPLYING A HIGH-FREQUENCY ALTERNATING ELECTRIC FIELD TO TWO PLASTIC MATERIAL PORTIONS
ENSEMBLE D'ÉLECTRODES À GALET, DISPOSITIF COMPRENANT UN ENSEMBLE D'ÉLECTRODES À GALET ET PROCÉDÉ SERVANT À SOUMETTRE DEUX SECTIONS EN MATIÈRE PLASTIQUE À L'ACTION D'UN CHAMP ALTERNATIF ÉLECTRIQUE À HAUTE FRÉQUENCE

(30) Priorität: 12.06.2018 DE 102018113999
(43) Veröffentlichungstag der Anmeldung: 21.04.2021
(73) Patentinhaber: ConsultEngineerIP AG, 6343 Buonas (CH)
(72) Erfinder: WÜRSCH, Christoph, 9470 Werdenberg (CH); PITTORINO, Tindaro, 9472 Graps (CH); GUBLER, Ulrich, 6343 Buonas (CH)
(74) Vertreter: Patentanwälte und Rechtsanwalt Weiß, Arat & Partner mbB
(86) Internationale Anmeldenummer: PCT/EP2019/065190
(87) Internationale Veröffentlichungsnummer: WO 2019/238665

(56) Entgegenhaltungen:
- DE-B- 1 154 932
- GB-A- 726 885
- US-A- 2 706 233

## Beschreibung

### Technisches Gebiet

Die Erfindung betrifft eine Rollenelektrodenanordnung nach dem Oberbegriff des Anspruchs 1 sowie eine Vorrichtung umfassend eine solche Rollenelektrodenanordnung und ein Verfahren zur Beaufschlagung eines Werkstücks mit einem hochfrequenten elektrischen Wechselfeld.

### Stand der Technik

Es ist bekannt, Rollenelektroden zum Hochfrequenzschweißen von Kunststoffen einzusetzen.

Wie andere Schweißverfahren dient auch das Hochfrequenzschweißen von Kunststoffen dem unlösbaren Verbinden zweier Werkstücke oder Abschnitte, hier zweier Kunststoff-Werkstücke bzw. -Abschnitte, welche mit Wärme und Druck beaufschlagt werden.

Es ist bekannt, Planen für Fahrzeuge, Sonnenschutz-Planen, Werbeflächen, Kleidung, Verpackungen, aufblasbare Produkte wie Schlauchboote und Hüpfburgen sowie Wasserbetten und flexible Flüssigkeitstanks und vieles mehr durch Kunststoff-Hochfrequenzschweißen herzustellen.

Beim Kunststoff-Hochfrequenzschweißen werden zwei zu verbindende Abschnitte eines oder mehrerer Kunststoff-Werkstücke durch Anlegen eines elektrischen Wechselfelds üblicherweise zugleich lokal erhitzt, wodurch sie aufgeschmolzen werden, und unter Anwendung von Druck miteinander verpresst, wodurch sie dauerhaft miteinander verbunden werden.

Die Erwärmung entsteht durch Wechselwirkung zwischen dem elektrischen Wechselfeld und polaren Bestandteilen des Polymers bzw. Kunststoffes. Hierbei kommt es zu einer lokalen Erwärmung, weil im Kunststoff vorhandene Dipole sich im elektrischen Feld auszurichten versuchen, obwohl sie fest in das Polymergefüge des Kunststoffes eingebunden sind.

Ob ein Kunststoff also mittels Hochfrequenzschweißen bearbeitbar ist, hängt von seinem molekularen Aufbau, genauer von der Anwesenheit von Dipolen ab. Aus diesem Grund lassen sich nur bestimmte Kunststoffe mittels Hochfrequenzschweißen bearbeiten. Maßgeblich für die Verschweißbarkeit ist der dielektrische Verlustfaktor des Kunststoffes, der ein Maß für den Energieverlust darstellt, den der betreffende Kunststoff als Isolierstoff im elektrischen Feld bewirkt. Beispielsweise kommen Kunststoffe wie thermoplastisches Polyurethan (TPU), Polyvinylchlorid (PVC), Ethylen-Propylen-Dien-Kautschuk (EPDM) oder Polymethylmethacrylat (PMMA) in Betracht. Kunststoffe mit einem dielektrischen Verlustfaktor größer 0,01, vorzugsweise größer 0,1 eignen sich gut für das Hochfrequenz-Schweißen. TPU hat üblicherweise einen dielektrischen Verlustfaktor von etwa 0,07; PVC hat üblicherweise einen dielektrischen Verlustfaktor größer 0,1.

Aufgrund der hohen Leistung, mit welcher Hochfrequenz-Kunststoff-Schweißanlagen betrieben werden, diese liegt teilweise im zweistelligen Kilowattbereich, sind bestimmte einzuhaltende Frequenzen gesetzlich vorgegeben. Am häufigsten wird ein elektrisches Wechselfeld mit einer Frequenz von 27.12 MHz verwendet, da es sich um ein sogenanntes "ISM-Band" handelt, welches beispielsweise von Hochfrequenzgeräten in der Industrie frei benutzt werden kann.

Maschinen zum Hochfrequenzschweißen (HF-Schweißen) von Kunststoffen umfassen in der Regel einen Generator bzw. Hochfrequenzgenerator, Schweißelektroden und eine Presse, wobei die vorgenannten Bauteile zumindest teilweise zusammengefasst sein können. Der Generator dient der Erzeugung einer hochfrequenten elektrischen Wechselspannung, beispielsweise mit 27.12 MHz, und üblicherweise mehreren Kilovolt. Die Presse dient dazu, die Schweißelektroden auf das zu bearbeitende Werkstück bzw. die zu verschweißenden Abschnitte zu pressen und die Elektroden dienen der lokalen Erhitzung des Kunststoffes, indem sie das Wechselfeld erzeugen.

Vorrichtungen und Verfahren zum Hochfrequenz-Kunststoffschweißen sind in zahlreichen Ausführungen bekannt. Wird die Anlage kontinuierliche betrieben, so ist es beispielsweise bekannt, die zu verschweißenden Kunststoff-Abschnitte zwischen zwei rollenförmigen Elektroden hindurch zu bewegen. Ein hierbei anzutreffendes Problem stellt die Funkenbildung an mehreren Orten dar.

Einerseits kann Funkenbildung an einer Kontaktstelle zwischen einer vom Generator ausgehenden Zuleitung und der Elektrode, welche bei sich im Betrieb drehenden Elektroden oftmals als Schleifkontakt ausgebildet ist, auftreten. Im Stand der Technik wurde dieser Funkenbildung durch die Auswahl hochwertiger und zuverlässiger Schleifkontakte entgegengetreten.

Andererseits kann Funkenbildung durch Plasmaentladung auftreten. Zu dieser Plasmaentladung kommt es in Bereichen zwischen den Elektroden, an denen eine ausreichend hohe elektrische Feldstärke vorliegt. Im Fall von rollenförmigen Elektroden sind derartige Bereiche beidseits einer Andruckzone zwischen Elektrode und zu bearbeitendem Werkstück vorhanden und im Wesentlichen keilförmig.

Aus dem Stand der Technik ist beispielsweise die DE 1 154 932 A bekannt, welche auch das Problem der Funkenbildung adressiert. Gemäß der DE 1 154 932 A tritt die Funkenbildung jedoch auf Grund mangelhafter Punktkontakte auf. Dementsprechend schlägt die DE 1 154 932 A vor, eine der rollenförmigen Elektroden mit einer außenliegenden schraubenförmigen Drahtfeder auszustatten, die flexibel ist und von der gegenüberliegenden rollenförmigen Elektrode teilweise eingedrückt werden kann. Somit tritt ein flächiger Kontakt an die Stelle des Punktkontaktes, was das Risiko des Funkenschlags verringert. Allerdings sind noch immer Funkenschläge durch Plasmaentladungen in demjenigen Bereich zu befürchten, welcher direkt an die Kontaktstelle beider Elektroden angrenzt. Dieses Problem wird von der DE 1 154 932 A nicht gelöst.

Aus dem Stand der Technik ist weiterhin die GB 2 367 784 A bekannt, welche eine Vorrichtung zum kontinuierlichen Verschweißen von Folien offenbart. Weiterhin ist die DE 299 06 706 U1 bekannt, welche eine robotergeführte Rollennaht-Schweißzange offenbart.

Ein weiteres Problem bekannter Vorrichtungen und Verfahren zum Hochfrequenz-Kunststoffschweißen ist in einer unzureichenden Druckbeaufschlagung zu verschweißender Kunststoffabschnitte zu sehen.

Um eine Andruckzone zu verlängern, wurde im Stand der Technik vorgeschlagen, einer rollenförmigen Elektrode, welche zugleich als Presse dient, eine konkave Gegenelektrode zuzuordnen, welche komplementär zur rollenförmigen Elektrode geformt ist und somit die Andruckzone verlängert. Dies macht die Vorrichtung jedoch sehr unflexibel hinsichtlich der Ausgestaltung verschiedener zu bearbeitender Werkstoffe. Beispielsweise kann eine Schweißnahtgeometrie, welche Kurven aufweist, mit einer konkaven Gegenelektrode nicht bearbeitet werden.

Ferner ist im Stand der Technik an zusätzliche Andruckrollen gedacht, welche jedoch ebenfalls die Komplexität der Anlage zu Lasten der Flexibilität hinsichtlich etwaiger zu bearbeitender Werkstoffe erhöhen. Auch hier ergibt sich nämlich stets das Problem, dass nur geradlinige Schweißnähte ohne Kurven erzeugt werden können.

Im Stand der Technik sind ausserdem die DE 299 06 706 U1 betreffend eine robotergeführte Rollennaht-Schweißzange sowie die GB 2 367 784 A betreffend eine Vorrichtung und ein Verfahren zum Verschweißen polymerer Werkstücke bekannt.

### Aufgabe der Erfindung

Die Aufgabe der vorliegenden Erfindung ist es, die Nachteile aus dem Stand der Technik zu überwinden. Insbesondere soll eine Rollenelektrodenanordnung bzw. eine Vorrichtung umfassend eine solche Rollenelektrodenanordnung bereitgestellt werden, welche hinsichtlich des oder der zu verschweißenden Werkstücke(s) möglichst flexibel ist und zugleich ein möglichst optimales Andrücken bzw. eine möglichst optimale Andruckzone bereitstellt und die Gefahr von Funkenschlag effizient verringert.

### Lösung der Aufgabe

Zur Lösung der Aufgabe führen die Gegenstände der unabhängigen Ansprüche.

Vorteilhafte Ausgestaltungen sind in den Unteransprüchen beschrieben.

Eine erfindungsgemäße Rollenelektrodenanordnung zur Beaufschlagung zweier Kunststoff-Abschnitte zumindest eines Werkstücks mit einem hochfrequenten elektrischen Wechselfeld umfasst einen Kern, welcher zumindest teilweise aus elektrisch leitendem Material besteht und von einem Reifen umgeben ist, der mit einem Schutzgas befüllbar ist und aus einem dielektrischen Material besteht.

Vorzugsweise ist der Reifen mit dem Schutzgas befüllt. Das Schutzgas kann hierbei ausgewählt sein aus der folgenden Gruppe: Schwefelhexafluorid (SF₆) oder ein Gasgemisch enthaltend Schwefelhexafluorid, ein Fluoronitril oder ein Gasgemisch enthaltend ein Fluoronitril; ein Fluorketon oder ein Gasgemisch enthaltend Fluorketon, Kohlendioxid oder ein Gasgemisch enthaltend Kohlendioxid. Fluoronitrile und/oder Fluoroketone können somit als Ersatz für Schwefelhexafluorid angesehen werden. Es können selbstverständlich zahlreiche andere Gase oder Gasgemische zum Einsatz kommen, insbesondere solche, die bereits als Schutzgase in der Hochspannungstechnik Verwendung finden.

Der Reifen weist vorzugsweise ein Ventil zum Einbringen und/oder Entnehmen des Schutzgases auf. Auf diese Weise kann beispielsweise das verwendete Schutzgas oder Schutzgas-Gemisch nachgefüllt werden, falls ein unerwünschter Gasverlust eintritt. Ferner kann der Reifen über das Ventil auch vollständig entleert und das Schutzgas oder Schutzgasgemisch ausgetauscht bzw. durch ein anderes Schutzgas oder Schutzgasgemisch ersetzt werden. Schliesslich kann auch der gewünschte Füllgrad des Reifens unter Benutzung des Ventils eingestellt werden.

Der Reifen besteht hierbei vorzugsweise aus einem Dielektrikum mit kleinem dielektrischen Verlustfaktor, beispielsweise kleiner als 0,01, bevorzugter kleiner als 0,005 und noch bevorzugter kleiner als 0,001. Der Reifen soll schließlich das zumindest eine Werkstück nur mit Druck beaufschlagen, aber nicht selbst erwärmt und verschweißt werden.

Wird die Rollenelektrodenanordnung beispielsweise auf zwei miteinander zu verschweißende Kunststoffabschnitte gedrückt, um diese zu verschweißen, so verformt sich der Reifen, was zu einer Vergrößerung der Andruckzone führt. Indem der für das Verschweißen nötige Druck im Vergleich zu unbeschichteten Rollenelektrodenanordnungen und im Vergleich zu Rollenelektrodenanordnungen mit einer starren Beschichtung über eine vergrößerte Zone hinweg auf die zu verbindenden Kunststoffabschnitte ausgeübt wird, werden diese länger mit Druck beaufschlagt, was wiederum die Qualität der Verbindung verbessert. Beispielsweise kann daher beim kontinuierlichen HF-Kunststoffschweißen die Geschwindigkeit gegenüber bekannten Verfahren erhöht werden. Weiterhin kann auf separate Andruckelemente wie Andruckrollen und dergleichen verzichtet werden.

Ein wesentlicher Vorteil ist jedoch, dass der Reifen aus einem Dielektrikum gefertigt und somit elektrisch isolierend ist. Hierdurch wird in unmittelbarer Nachbarschaft zur Andruckzone, innerhalb der die Feldstärke des elektrischen Wechselfelds sehr stark ist, die Gefahr von Plasma-Bildung und entsprechend auch von Plasma-Entladung zumindest stark verringert.

Der Reifen kann aus einem Kunststoff bestehen. Hierbei sollte wie bereits erwähnt darauf geachtet werden, dass der Kunststoff nicht oder nicht wesentlich mit dem elektrische Wechselfeld in Wechselwirkung tritt bzw. diesem gegenüber weitgehend inert ist. Hierbei kann beispielsweise an entsprechende Elastomere oder Silikone mit entsprechend geringem dielektrischem Verlustfaktor gedacht sein. Eine Dicke des Reifens kann beispielsweise zwischen 0,1 mm und 5 mm liegen. Es kann auch an den Bereich zwischen 0.2 mm und 4 mm gedacht sein, ferner an den Bereich zwischen 0,3 mm und 3 mm sowie an den Bereich zwischen 0,4 mm und 2,5 mm sowie bevorzugt an den Bereich zwischen 0,5 mm und 2 mm.

Hierbei wird im Rahmen der vorliegenden Erfindung unter Rollenelektrodenanordnung eine Einrichtung bzw. Anordnung umfassend eine Elektrode mit kreisförmigem Querschnitt angesehen, welche sich rollend über ein Werkstück hinweg bewegen kann. Falls eine feststehende Rollenelektrodenanordnung verwendet werden soll, kann alternativ daran gedacht sein, das Werkstück entsprechend relativ zur Elektrode zu bewegen, während diese zwar ortsfest gelagert ist, aber gleichzeitig eine Drehbewegung ausführt.

Die Rollenelektrodenanordnung kann beispielsweise zylinderförmig oder zumindest im Wesentlichen zylinderförmig oder kugelförmig oder zumindest im Wesentlichen kugelförmig ausgebildet sein. Ferner kann an andersartig geformte Rollenelektrodenanordnungen gedacht sein, welche sich rollend über ein Werkstück hinweg bzw. relativ zu diesem bewegen können.

Ein besonderer Vorteil einer zumindest im Wesentlichen kugelförmigen Rollenelektrodenanordnung liegt darin, dass auch zu verbindende Kunststoff-Abschnitte mit komplexer Schweißnaht-Geometrie zuverlässig verschweißt werden können. Zahlreiche aus dem Stand der Technik bekannte Rollenelektroden können demgegenüber nur solche Abschnitte zuverlässig verschweißen, die eine geradlinige Schweißnaht erfordern.

Bei dem zu bearbeitenden Werkstück oder bei den zu verbindenden bzw. verschweißenden Abschnitten handelt es sich um verschweißbare Kunststoffe mit entsprechend hohem dielektrischen Verlustfaktor. Bei dem hochfrequenten elektrischen Wechselfeld handelt es sich vorzugsweise um ein Wechselfeld mit einer Frequenz von 27.12 MHz. Es kann aber auch an andere Frequenzen, insbesondere an Industriefrequenzen bzw. ISM-Bänder gedacht sein. Insbesondere kann an folgende ISM-Bänder gedacht sein: 6,765 MHz bis 6,795 MHz; 13,553 MHz bis 13,567 MHz; 26,957 MHz bis 27,283 MHz; 40,66 MHz bis 40,70 MHz; 433,05 MHz bis 434,79 MHz oder 902 MHz bis 928 MHz. Ganz besonders kann an die Zentralfrequenzen der ISM-Bänder gedacht sein, beispielhaft seien hier 13.56 MHz, 40,68 MHz oder 433,92 MHz aufgeführt.

Von der vorliegenden Erfindung soll auch eine Vorrichtung zur Beaufschlagung eines Werkstücks mit einem hochfrequenten elektrischen Wechselfeld umfassend einen Hochfrequenzgenerator sowie zumindest eine Rollenelektrodenanordnung wie vorstehend beschrieben umfasst sein. Diese Vorrichtung wird nachfolgend beschrieben.

Derartige Generatoren sind aus dem Stand der Technik hinreichend bekannt. Die Vorrichtung umfasst stets eine zweite Elektrode bzw. Gegenelektrode oder Gegenelektrodenanordnung, wobei hier beispielsweise auch an eine flächige Elektrode gedacht sein kann. So ist es möglich, einen Teil eines Tisches, auf welchem die zu verschweißenden Abschnitte liegen, in Form einer flächigen Elektrode auszubilden. Es kann auch daran gedacht sein, eine flächige Elektrode in einen Tisch oder dergleichen einzulassen.

Bevorzugt ist die Gegenelektrodenanordnung jedoch so ausgebildet, wie vorstehend für die Rollenelektrodenanordnung beschrieben. Eine solche Anordnung ist deutlich einfacher handhabbar als eine Anordnung, bei welcher ein Teil des Tisches als Elektrode ausgebildet ist, beispielsweise, weil der Tisch und die zugehörige Elektrode, welche beispielsweise im Tisch eingelassen sein kann, üblicherweise sehr groß ausfallen.

Vorzugsweise wirken beide Elektrodenanordnungen auch als Andruckelement und werden mit entsprechenden Mitteln in Richtung auf das Werkstück zu mit Kraft beaufschlagt, so dass auf separate Andruckelemente verzichtet werden kann.

Vorzugsweise ist die zumindest eine Rollenelektrodenanordnung eingerichtet, um angetrieben zu werden, um das zu bearbeitende Werkstück zu transportieren. Es sind somit keine separaten Vorschub- oder Transportmittel nötig. Umfasst die Vorrichtung zwei Rollenelektrodenanordnungen, so kann einerseits nur eine angetrieben sein, wobei die zweite sich vorzugsweise durch die von der ersten Rollenelektrodenanordnung bewirkte Bewegung des Werkstücks passiv dreht. Andererseits kann auch daran gedacht sein, dass beide Rollenelektrodenanordnungen sich aktiv drehen bzw. angetrieben werden, was vorzugsweise synchron erfolgen sollte.

Die Rollenelektrodenanordnung bzw. die Rollenelektrodenanordnungen können jeweils in einem Luftlager oder in einem Rollenlager gelagert sein. Insbesondere bei einer zumindest im Wesentlichen zylinderförmigen Rollenelektrodenanordnung sind zahlreiche Arten der Lagerung denkbar, welche beispielsweise über eine zentrale Achse der Rollenelektrodenanordnung an dieser angreifen. Bei zumindest im Wesentlichen kugelförmigen Rollenelektrodenanordnungen kommt insbesondere eine Lagerung über Rollenlager bzw. im Allgemeinen eine Lagerung ähnlich bekannter Computer-Mäuse älterer Generation oder ähnlich der Lagerung bekannter Trackballs in Eingabegeräten zum Einsatz. Ferner kann bei zumindest im Wesentlichen kugelförmigen Rollenelektrodenanordnungen an die Verwendung von Luftlagern gedacht sein.

Vorzugsweise umfasst die Vorrichtung eine Einrichtung zur kontaktlosen Übertragung von Energie bzw. einer elektrischen Hochfrequenz auf die zumindest eine Rollenelektrodenanordnung. Daraus ergibt sich der Vorteil, dass, beispielsweise im Gegensatz zu Schleifkontakten und dergleichen, die Gefahr eine Funkenschlags an einer Kontaktstelle zwischen Zuleitung und Elektrode deutlich sinkt. Die kontaktlose Übertragung kann beispielsweise durch kapazitive Kopplung erfolgen, wobei Energie mittels eines elektrischen Feldes drahtlos übertragen wird. Entsprechende Vorrichtungen sind aus dem Stand der Technik hinreichend bekannt.

Wie bereits ausgeführt kann einer Rollenelektrodenanordnung eine zweite Rollenelektrodenanordnung zugeordnet sein, welche sowohl die Aufgabe der Gegenelektrode als auch die Aufgabe eines Gegendruckelements erfüllt.

Alternativ kann die Vorrichtung einen Tisch als Gegendruckelement umfassen In den Tisch kann auf bereits beschriebene Weise eine flächige Gegenelektrode eingelassen bzw. eingearbeitet sein.

Ferner kann die Vorrichtung nicht nur alternativ zur Gegenelektrode sondern auch komplementär einen Tisch umfassen. Dieser kann beispielsweise als Auflagentisch für die zu verschweißenden Werkstücke bzw. Abschnitte dienen. Der Auflagentisch kann beispielsweise eine Ausnehmung umfassen, durch welche die Gegenelektrode die zu verschweißenden Werkstücke kontaktiert.

Ein als Gegendruckelement dienender Tisch mit eingelassener Gegenelektrode kann hierbei ein im Wesentlichen planes Gegendruckelement darstellen. Alternativ kann der Tisch jedoch dreidimensionale Konturen aufweisen, welche beispielsweise an die zu verbindenden Abschnitte angepasst sein können.

Es kann auch an eine Vorrichtung gedacht sein, welche ein Achssystem oder einen Knickarmroboter umfasst, an welchem die Rollenelektrodenanordnung(en) geführt ist bzw. geführt sind. Durch eine solche Anordnung kann das Verschweißen hochautomatisiert und sehr schnell durchgeführt werden. Entsprechende Achssysteme und Knickarmroboter sind aus dem Stand der Technik hinreichend bekannt.

Die vorliegende Erfindung betrifft ferner ein Verfahren zur Beaufschlagung eines Werkstücks mit einem hochfrequenten elektrischen Wechselfeld mittels einer Vorrichtung wie vorstehend beschrieben, wobei das zu bearbeitende Werkstück mit einer Rollenelektrodenanordnung wie ebenfalls vorstehend beschrieben auch mit einer Kraft beaufschlagt wird.

Hinsichtlich dieses Verfahrens kann daran gedacht sein, die Übertragung der elektrischen Hochfrequenz auf die Rollenelektrodenanordnung bzw. zumindest auf eine der Rollenelektrodenanordnungen kontaktlos erfolgen zu lassen, beispielsweise durch das Prinzip der kapazitiven Kopplung.

Bei der Vorrichtung handelt es sich insbesondere um eine Vorrichtung zum Hochfrequenzschweißen von Kunststoffen. Es kann aber auch daran gedacht sein, das elektrische Wechselfeld für andere Zwecke zu nutzen, beispielsweise zum Verleimen zweier Werkstücke oder Abschnitte.

Im Allgemeinen kann stets daran gedacht sein, zwei Abschnitte desselben Werkstücks oder zwei Abschnitte verschiedener Werkstücke miteinander zu verbinden, insbesondere zu verschweißen.

Werden zwei Werkstücke miteinander verbunden, so ist vorzugsweise daran gedacht, dass diese aus demselben Material gefertigt sind. Es kann aber auch daran gedacht sein, dass beide aus unterschiedlichen Materialien gefertigt sind. Hierbei kann es sich als vorteilhaft erweisen, beispielsweise thermoplastisches Polyurethan (TPU) als Verbinder bzw. Schweißzusatz zu verwenden.

Es kann daran gedacht sein, dass die Vorrichtung das zumindest eine Werkstück derart mit der Kraft beaufschlagt, dass das Schutzgas innerhalb des Reifens so verdrängt wird, dass der Kern in der Mitte der Andruckzone direkt oder beinahe auf dem Reifen aufliegt, sich dort also kein oder kaum Schutzgas mehr zwischen einer inneren Oberfläche des Reifens und dem Kern befindet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Anordnung umfassend zwei Rollenelektroden 7 gemäß dem Stand der Technik,
Figur 2 eine Anordnung umfassend eine Rollenelektrode 7 und ein flächige Gegenelektrode 8 gemäß dem Stand der Technik,
Figur 3 eine Rollenelektrodenanordnung 1 gemäß einem Ausführungsbeispiel der vorliegenden Erfindung,
Figur 4 eine geschnittene Seitenansicht nach Figur 3 mit weiteren Details,
Figur 5 eine Anordnung umfassend die Rollenelektrodenanordnung 1 nach Figur 3,
Figur 6 eine geschnittene Seitenansicht nach Figur 5 mit weiteren Details,
Figur 7 eine Anordnung umfassend zwei Rollenelektrodenanordnungen 1 gemäß einem weiteren Ausführungsbeispiel der vorliegenden Erfindung,
Figur 8 eine geschnittene Seitenansicht nach Figur 7 mit weiteren Details in einer ersten Variante,
Figur 9 eine geschnittene Seitenansicht nach Figur 7 in einer zweiten Variante und
Figur 10 eine geschnittene Seitenansicht nach Figur 7 in einer dritten Variante.

### Ausführungsbeispiel

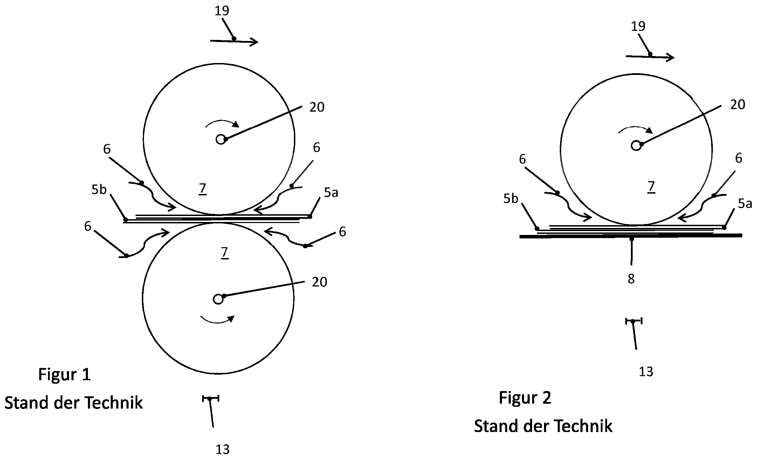

In Figur 1 ist eine Anordnung umfassend zwei Rollenelektroden 7 gemäß dem Stand der Technik dargestellt.

Figur 2 zeigt eine Anordnung gemäß dem Stand der Technik, welche im Vergleich zur Anordnung nach Figur 1 anstatt der unteren Rollenelektrode 7 eine flächige Gegenelektrode 8, beispielsweise in Form eines Tisches, umfasst.

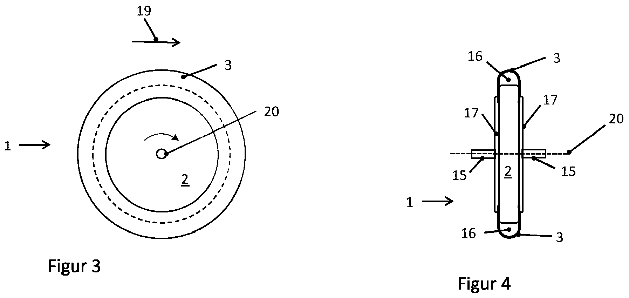

Figur 3 zeigt eine Rollenelektrodenanordnung 1 gemäß einem Ausführungsbeispiel der vorliegenden Erfindung. Die Rollenelektrodenanordnung 1 umfasst einen Kern 2 und einen Reifen 3, welcher mit einem Schutzgas befüllbar ist und aus einem dielektrischen Material besteht, nachfolgend als Reifen 3 bezeichnet. Ferner ist eine Drehachse 20 dargestellt.

Figur 4 zeigt eine geschnittene Seitenansicht nach Figur 3, wobei weitere Details sichtbar sind, insbesondere Halbachsen 15 der Rollenelektrodenanordnung 1 und ein Innenraum 16 des Reifens 3. Der in Figur 4 gezeigten Ansicht ist deutlich entnehmbar, dass vornehmlich eine Lauffläche des Kerns 2 von dem Reifen 3 umgeben ist. Seitlich sind dielektrische Abdeckscheiben 17 angeordnet.

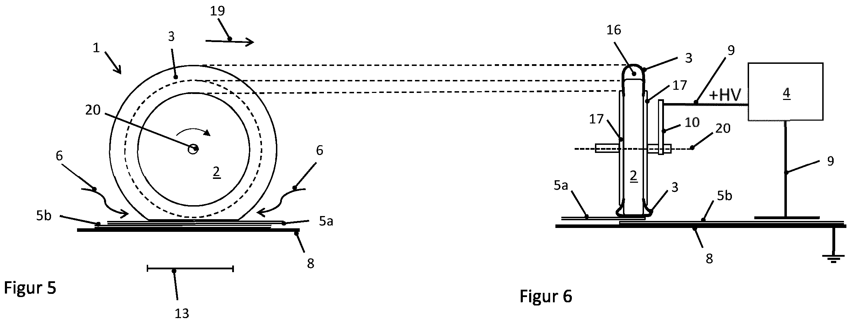

Figur 5 zeigt eine Anordnung analog Figur 2 jedoch mit einer Rollenelektrodenanordnung 1 gemäß Figur 3.

Figur 6 zeigt eine geschnittene Seitenansicht nach Figur 5, wobei weitere Details sichtbar sind, insbesondere ein Generator 4, ein Abnehmer 10 und Zuleitungen 9. Die gestrichelten Pfeile zwischen den Figuren 5 und 6 veranschaulichen die Lage eines äußeren Umfangs des Reifens 3, eines äußeren Umfangs des Kerns 2 sowie eines inneren Umfangs des Reifens 3.

Der äußere Umfang des Kerns 2 ist auch in den Figuren 3, 5 und 7 jeweils durch eine kreisförmige gestrichelte Linie angedeutet.

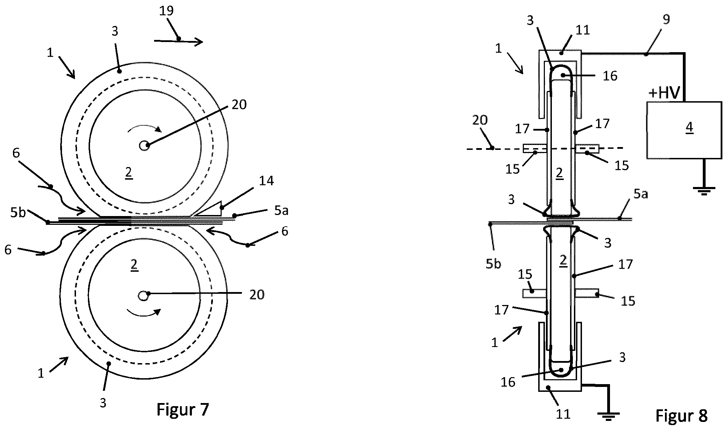

Figur 7 zeigt eine Anordnung analog Figur 1 jedoch mit zwei Rollenelektrodenanordnungen 1 gemäß einem weiteren Ausführungsbeispiel der vorliegenden Erfindung.

Figuren 8 bis 10 zeigen geschnittene Seitenansichten nach Figur 7 in drei Varianten, wobei weitere Details sichtbar sind, beispielsweise die dielektrischen Abdeckscheiben 17, die Halbachsen 15, der Generator 4 mit der Zuleitung 9, die Einrichtungen 11 zur kontaktlosen Übertragung und jeweils die Innenräume 16 der Reifen 3. Die Ausführungsbeispiele der Figuren 8, 9 und 10 unterscheiden sich jeweils hinsichtlich ihrer Verschaltung, insbesondere hinsichtlich ihrer Kontaktierung mit dem Generator 4. In den Ausführungsbeispielen gemäß den Figuren 8 bis 10 steht jeweils zumindest eine der Rollenelektrodenanordnungen 1 kontaktlos über eine Einrichtung zur Übertragung 11 mit dem Generator 4 in Verbindung.

Den Figuren 3 bis 10 ist entnehmbar, dass der Reifen 3 nicht ausschließlich einer Lauffläche des Kerns 2 aufliegt, sondern auch beide Seiten des Kerns 2 teilweise umfängt. Derjenige Abschnitt beider Seiten des Kerns 2, welcher nicht von dem Reifen 3 umgeben ist, wird jeweils von einer dielektrischen Abdeckscheibe 17 abgedeckt.

Bei den Einrichtungen zur kontaktlosen Übertragung 11 handelt es sich um U-förmige, die Rollenelektrodenanordnung 1 teilweise umgreifende, Elektroden.

In Figur 8 ist die unten in der Figur gezeigte Rollenelektrodenanordnung 1, welche als Gegenelektrode fungiert, über die Einrichtung zur kontaktlosen Übertragung 11 geerdet. Ein Ausgang des Generators 4 ist ebenfalls geerdet.

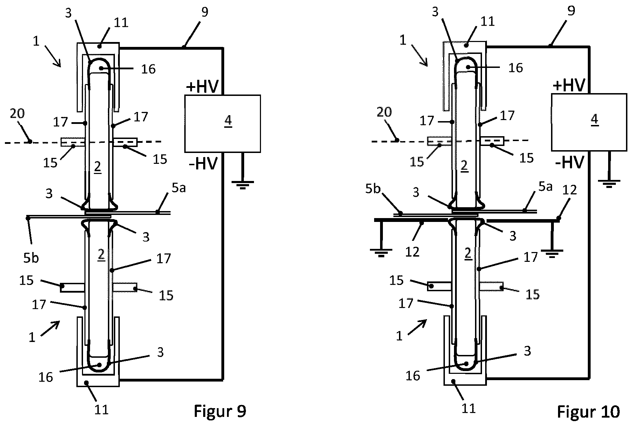

In Figur 9 stehen beide Rollenelektrodenanordnungen 1 mit dem Generator 4 in Verbindung, sind aber mit gegenläufiger Polarität beaufschlagt.

In Figur 10 ist zusätzlich zur Anordnung nach Figur 7 ein geerdeter Auflagentisch 12 vorgesehen.

Der besseren Übersicht halber sind nicht in sämtlichen Figuren sämtliche dargestellten Merkmale durch Bezugsziffern bezeichnet.

Bezugnehmend auf die Figuren 1 bis 10 erklärt sich die Funktionsweise der erfindungsgemäßen Vorrichtung folgendermaßen:
Aus dem Stand der Technik sind Vorrichtungen umfassend zumindest eine Rollenelektrode 7 bekannt, welche zwei Werkstücke 5a, 5b bzw. zwei Abschnitte jeweils eines Werkstückes miteinander verschweißen.

In einer Vorrichtung nach Figur 1 drehen sich hierzu beide Rollenelektroden 7 gegenläufig um die Drehachsen 20, wie die Pfeile innerhalb der Rollenelektroden 7 andeuten. Hierbei bewegen sich die Rollenelektroden 7 relativ zu den Werkstücken 5a, 5b in Richtung eines Pfeils 19.

In einer Vorrichtung nach Figur 2 dreht sich die Rollenelektrode 7 und bewegt sich somit in Richtung des Pfeils 19 entlang der auf einer flächigen Gegenelektrode 8, welche meist als Tisch oder als Teil eines Tisches fungiert, gelagerten zu verschweißenden Werkstücke 5a, 5b. Bei beiden Ausführungen bekannter Vorrichtungen kommt es beispielsweise in einem im Wesentlichen keilförmigen Bereich, welcher durch Pfeile 6 angedeutet ist, zu unerwünschter Plasmabildung und Plasmaentladung, da in diesem Bereich die Feldstärke des von den Rollenelektroden 7 ausgehenden bzw. erzeugten elektrischen Feldes sehr stark ist. Die Gefahr einer solchen Plasmaentladung mit Funkenbildung und den damit einhergehenden unerwünschten Effekten und Gefahren steigt proportional zur Feldstärke und ist somit bei den in den Figuren 1 und 2 gezeigten Anordnungen in einer unmittelbaren Umgebung einer Andruckzone, innerhalb der die Werkstücke 5a, 5b von den Elektroden 7, 8 aufeinandergepresst werden, am höchsten.

Eine Länge 13 der jeweiligen Andruckzone, also desjenigen Abschnitts, innerhalb welchem die Werkstücke 5a, 5b mit Druck beaufschlagt werden, ist der Übersicht halber unterhalb der Vorrichtungen angedeutet.

In der Anordnung nach Figur 3 ist der Kern 2 die eigentliche Elektrode, welche von dem Reifen 3 umgeben ist. Die Rollenelektrodenanordnung 1 ist in den Figuren 3 und 4 separat dargestellt. In den Figuren 5 und 6 ist die Rollenelektrodenanordnung 1 in Betriebslage zusammen mit einer flächigen Gegenelektrode 8 dargestellt.

Die Deformation des Reifens 3 der Rollenelektrodenanordnung 1 ist in Figur 5 deutlich erkennbar, was zu einer im Vergleich zur Anordnung nach Figur 2 signifikant vergrößerten Länge 13 der Andruckzone führt. Weiterhin geht aus Figur 5 hervor, dass die unmittelbare Umgebung desjenigen Punktes, an welchem sich die Elektrode bzw. der Kern 2 und die flächige Gegenelektrode 8 am nächsten kommen, von dem Reifen 3 gestellt wird bzw. ausgefüllt ist. Diejenigen Stellen der im Wesentlichen keilförmigen Bereiche, welche durch Pfeile 6 angedeutet sind, an denen Luft vorhanden ist und Plasma gebildet werden kann, weisen eine im Vergleich zur Anordnung nach Figur 2 deutlich größere Entfernung zwischen den Elektroden, also in Figur 5 dem Kern 2, und der flächigen Gegenelektrode 8 auf, so dass auch die Feldstärke und somit die Gefahr von Plasmaentladungen deutlich verringert ist.

Der Figur 5 ist ebenfalls deutlich zu entnehmen, dass der Kern 2, also die eigentliche Elektrode, etwa in einer Mitte der Andruckzone dem Werkstück 5a bzw. dem obenauf liegenden zu verschweißenden Abschnitt doch so nahe kommt, dass eine für das Verschweißen ausreichende Feldstärke gewährleistet ist.

Hierbei bringt die Verwendung des befüllbaren Reifens 3 einen weiteren Vorteil. So kann sowohl der auf das zumindest eine Werkstück 5a, 5b bewirkte Anpressdruck als auch die Länge der Andruckzone auch durch den Füllgrad des Reifens 3 bestimmt werden. Beispielsweise können mehrere Testläufe mit unterschiedlichen Füllgraden des Reifens 3 gefahren werden, um festzustellen, welcher Füllgrad das beste Schweiß-Ergebnis bewirkt. Diese kann unter anderem von der Länge der Andruckzone 13 und/oder von dem ausgeübten Druck abhängen.

In Figur 6 ist dargestellt, dass der Generator 4, welcher die hochfrequente elektrische Wechselspannung erzeugt, über eine Zuleitung 9 und einen Abnehmer 10, welcher in Form eines Schleifkontakts ausgebildet ist, mit dem Kern 2 in Verbindung steht. Weiterhin ist die flächige Gegenelektrode 8 geerdet und es besteht eine Kopplung zwischen dem Referenzpotential und dem Generator 4 über das Prinzip der kapazitiven Kopplung zwischen der flächigen Gegenelektrode 8 und dem Generator 4.

Die Funktionsweise der in den Figuren 7 bis 10 dargestellten Vorrichtungen sowie durch Verwendung der Rollenelektrodenanordnungen 1 herbeigeführte Vorteile ergeben sich in Analogie zu den vorstehenden Ausführungen betreffend die Figuren 3 bis 6. Diese gelten selbstverständlich sowohl für die jeweils oben in den Figuren 7 bis 10 dargestellten Rollenelektrodenanordnungen 1 als auch für die jeweils unten dargestellten Rollenelektrodenanordnungen 1, welche die Gegenelektrode darstellen. Lediglich zur Veranschaulichung ist in Figur 7 einer der im Wesentlichen keilförmigen Bereiche 14 überproportional vergrößert dargestellt und nicht nur durch einen Pfeil 6 angedeutet. Aufgrund der Wölbung des Reifens 3 ist der Bereich 14 tatsächlich nur näherungsweise keilförmig, ferner ist er natürlich nicht tatsächlich als abgegrenzter Bereich vorhanden.

Gemäß der in Figur 8 gezeigten Ausführungsform ist nur die obere Rollenelektrodenanordnung 1 an einen ersten Ausgang des Generators 4 angeschlossen. Entsprechend sind die unten gezeigte Rollenelektrodenanordnung 1 und ein zweiter Ausgang des Generators 4 geerdet.

Durch "+HV" und "-HV" ist in zahlreichen Figuren eine Polarität der vom Generator 4 erzeugten Spannung als Momentaufnahme dargestellt. Die Polarität der Ausgänge des Generators 4 ändert sich natürlich mit der Frequenz der erzeugten Wechselspannung.

Gegenüber der in Figur 8 gezeigten Anordnung, gemäß der die unten in der Figur gezeigte Rollenelektrodenanordnung 1 und der Generator 4 geerdet sind, weisen die Anordnungen gemäß den Figuren 9 und 10 den Vorteil auf, dass die jeweils unten in den Figuren dargestellten Rollenelektrodenanordnungen 1 mit dem Generator 4 verbunden sind. Hierbei werden gemäß den Anordnungen nach den Figuren 9 und 10 die untere und die obere Rollenelektrodenanordnung 1 jeweils mit gegenläufiger Polarität der elektrischen Wechselspannung beaufschlagt. Hierdurch kann die Gefahr von Plasmaentladungen weiter reduziert werden, da sich die Potentialdifferenz zwischen den Elektroden bzw. Kernen 2 nicht in Differenz zum geerdeten Nullpotential ergibt.

Der geerdete Auflagentisch 12 bewirkt abermals eine Erhöhung der Sicherheit.

Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen.

Beispielsweise kann anstelle eines Tisches an einen Rahmen oder dergleichen gedacht sein.

Ferner kann in sämtlichen der vorgenannten Ausführungsbeispiele ein solcher Tisch, ein solcher Rahmen oder dergleichen vorgesehen sein, um die zu verbindenden Werkstücke 5a, 5b zu lagern bzw. während des Verschweißens zu halten. Ein solcher Tisch, ein solcher Rahmen oder dergleichen kann somit allein zur Halterung bzw. Lagerung der zu verbindenden Werkstücke 5a, 5b bzw. Abschnitte, oder auch zusätzlich als Gegendruckelement und gegebenenfalls Gegenelektrode Verwendung finden

Der Reifen 3 kann in sämtlichen Ausführungsbeispielen entweder nur auf der Lauffläche des Kerns 2 vorgesehen sein oder den Kern 2 teilweise umfangen, wie dies in den Figuren 3 bis 10 dargestellt ist. Es ist auch denkbar, dass der Reifen 3 den Kern 2 vollständig umfängt und somit die dielektrischen Abdeckscheiben 17 entbehrlich macht. Der Reifen 3 soll hierbei vorzugsweise so angeordnet sein, dass er einen Funkenschlag durch Plasmabildung effektiv verhindern kann. Besonders bevorzugt ist die Anordnung wie in den Figuren 3 bis 10 gezeigt, wobei die Lauffläche des Kerns 2 und direkt angrenzende Abschnitte der Seitenflächen des Kerns 2, nicht aber die gesamten Seitenflächen, von dem Reifen 3 bedeckt sind.

Auf die dieleketrischen Abdeckscheiben 17 kann auch verzichtet werden.

Ist von einem Verschweißen zweier Werkstücke 5a, 5b die Rede, so soll stets auch das Verschweißen zweier Abschnitte eines oder mehrerer Werkstücke umfasst sein.

Die Einrichtung 11 zur kontaktlosen Übertragung muss nicht zwangsläufig als U-förmige Elektrode ausgestaltet sein, es können auch andere derartige Einrichtungen zur Anwendung kommen. Diese können mit dem Prinzip der kapazitiven Kopplung arbeiten, es kann aber auch an andere Möglichkeiten der kontaktlosen Energie-Übertragung gedacht sein. Selbstverständlich kann im Hinblick auf sämtliche Rollenelektrodenanordnungen 1 sowohl an eine kontaktierende Übertragung wie in Figur 6 dargestellt als auch an eine kontaktlose Übertragungen wie in den Figuren 8 bis 10 dargestellt gedacht sein.

Die Bewegungsrichtung 19 in den Figuren bezieht sich stets auf die Bewegung der Rollenelektrodenanordnungen 1 relativ zu den Werkstücken 5a, 5b, es handelt sich also um eine relative Angabe. Zwar wird vorzugsweise die Rollenelektrodenanordnung 1 relativ zu den Werkstücken 5a, 5b bewegt, jedoch ist auch der umgekehrte Fall denkbar. Werden die zu verschweißenden Werkstücke 5a, 5b relativ zu einer oder zwei feststehenden Rollenelektrodenanordnungen 1 bewegt, so erfolgt die Bewegung dieser Werkstücke 5a, 5b in Bezug auf die Figuren 5 und 7 entsprechend in Gegenrichtung des Pfeils 19.

Ferner kann in sämtlichen Ausführungsbeispielen umfassend zwei Rollenelektrodenanordnungen 1 daran gedacht sein, nur eine der Rollenelektrodenanordnungen 1 mit dem Generator 4 zu verbinden und die zweite Rollenelektrodenanordnung 1 zu erden. Insbesondere in Bezug auf die Figuren 7 bis 10 gilt dies selbstverständlich sowohl für die oben dargestellte als auch für die unten dargestellte Rollenelektrodenanordnung 1.

Die Halbachsen 15 können selbstverständlich in geeigneten Lagern (nicht dargestellt) gelagert sein. Die Halbachsen 15 können elektrisch isoliert sein, um zu verhindern, dass beispielsweise ein Benutzer in direkten Kontakt mit der Halbachse 15 tritt.

**Bezugszeichenliste**

| | | | | | |
|---|---|---|---|---|---|
| 1 | Rollenelektrodenanordnung | 34 | | | |
| 2 | Kern | 35 | | | |
| 3 | Reifen | 36 | | | |
| 4 | Generator | 37 | | | |
| 5 | Werkstück | 38 | | | |
| 6 | Pfeil | 39 | | | |
| 7 | Rollenelektrode | 40 | | | |
| 8 | Flächige Gegenelektrode | 41 | | | |
| 9 | Zuleitung | 42 | | | |
| 10 | Abnehmer | 43 | | | |
| 11 | Einrichtung zur kontaktlosen Übertragung | 44 | | | |
| 12 | Geerdeter Auflagentisch | 45 | | | |
| 13 | Länge der Andruckzone | 46 | | | |
| 14 | Keilförmiger Bereich | 47 | | | |
| 15 | Halbachsen | 48 | | | |
| 16 | Innenraum | 49 | | | |
| 17 | Dielektrische Abdeckscheibe | 50 | | | |
| 18 | | 51 | | | |
| 19 | Bewegungsrichtung | 52 | | | |
| 20 | Drehachse | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Rollenelektrodenanordnung (1) zur Beaufschlagung zweier Kunststoff-Abschnitte zumindest eines Werkstücks (5a, 5b) mit einem hochfrequenten elektrischen Wechselfeld zum Verbinden der Abschnitte durch Kunststoff-Hochfrequenzschweißen,
**gekennzeichnet durch**
einen Kern (2), welcher zumindest teilweise aus elektrisch leitendem Material besteht und von einem Reifen (3) umgeben ist, der mit einem Schutzgas befüllbar ist und aus einem dielektrischen Material besteht.

2. Rollenelektrodenanordnung (1) nach Anspruch 1, **dadurch gekennzeichnet, dass** die Frequenz des Wechselfelds in einem ISM-Band liegt.

3. Rollenelektrodenanordnung (1) nach einem der Ansprüche 1 oder 2, **dadurch gekennzeichnet, dass** sie kugelförmig oder zumindest im Wesentlichen kugelförmig ausgebildet ist oder zylinderförmig oder zumindest im Wesentlichen zylinderförmig ausgebildet ist.

4. Vorrichtung zur Beaufschlagung eines Werkstücks (5a, 5b) mit einem hochfrequenten elektrischen Wechselfeld umfassend einen Hochfrequenzgenerator (4) sowie zumindest eine Rollenelektrodenanordnung (1) nach einem der Ansprüche 1 bis 3.

5. Vorrichtung nach Anspruch 4, **gekennzeichnet durch** eine Gegenelektrodenanordnung (1), welche nach zumindest einem der Ansprüche 1-3 ausgebildet ist.

6. Vorrichtung nach einem der Ansprüche 4 oder 5, **dadurch gekennzeichnet, dass** die Rollenelektrodenanordnung (1) oder zumindest eine der Rollenelektrodenanordnungen (1) eingerichtet ist, um angetrieben zu werden, um das zu bearbeitende Werkstück (5a, 5b) zu transportieren.

7. Vorrichtung nach zumindest einem der Ansprüche 4 bis 6, **gekennzeichnet durch** eine Einrichtung (11) zur kontaktlosen Energieübertragung auf die zumindest eine Rollenelektrodenanordnung (1).

8. Vorrichtung nach zumindest einem der Ansprüche 4, 6, oder 7, **gekennzeichnet durch** einen Tisch als Gegendruckelement.

9. Vorrichtung nach Anspruch 8, **dadurch gekennzeichnet, dass** die Rollenelektrodenanordnung (1) an einem Achssystem oder an einem Knickarmroboter geführt wird.

10. Vorrichtung nach zumindest einem der Ansprüche 4 bis 9, **dadurch gekennzeichnet, dass** das Schutzgas ausgewählt ist aus der folgenden Gruppe:
Schwefelhexafluorid oder ein Gasgemisch enthaltend Schwefelhexafluorid, ein Fluoronitril oder ein Gasgemisch enthaltend ein Fluoronitril; ein Fluorketon oder ein Gasgemisch enthaltend Fluorketon, Kohlendioxid oder ein Gasgemisch enthaltend Kohlendioxid.

11. Vorrichtung nach zumindest einem der Ansprüche 4 bis 10, **dadurch gekennzeichnet, dass** der Reifen (3) ein Ventil zum Einbringen und/oder Entnehmen des Schutzgases aufweist.

12. Verfahren zur Beaufschlagung zweier Kunststoff-Abschnitte zumindest eines Werkstücks (5a, 5b) mit einem hochfrequenten elektrischen Wechselfeld zum Verbinden der Abschnitte durch Kunststoff-Hochfrequenzschweißen, mittels einer Vorrichtung nach zumindest einem der Ansprüche 4 bis 11, **dadurch gekennzeichnet, dass** das zumindest eine zu bearbeitende Werkstück (5a, 5b) mit einer Rollenelektrodenanordnung (1) nach einer der Ansprüche 1 bis 3 mit einer Kraft beaufschlagt wird, wobei die Frequenz des Wechselfelds in einem ISM-Band liegt.

13. Verfahren nach Anspruch 12, **dadurch gekennzeichnet, dass** die Übertragung der elektrischen Hochfrequenz auf die Rollenelektrodenanordnung (1) oder zumindest auf eine der Rollenelektrodenanordnungen (1) kontaktlos erfolgt.

14. Verfahren nach einem der Ansprüche 12 oder 13, **dadurch gekennzeichnet, dass** die Vorrichtung das zumindest eine Werkstück (5a, 5b) derart mit der Kraft beaufschlagt, dass das Schutzgas innerhalb des Reifens (3) so verdrängt wird, so dass der Kern (2) in der Mitte einer Andruckzone (13) direkt auf dem Reifen (3) aufliegt.

## Claims

1. Roller electrode assembly (1) for applying a high-frequency electric alternating field to two plastic sections of at least one workpiece (5a, 5b) for joining the sections by plastic high-frequency welding,
**characterized by**
a core (2) which consists at least partially of electrically conductive material and is surrounded by a tire (3) which can be filled with a protective gas and consists of a dielectric material.

2. Roller electrode assembly (1) according to claim 1, **characterized in that** the frequency of the alternating field lies within an ISM band.

3. Roller electrode assembly (1) according to one of claims 1 or 2, **characterized in that** it is spherical or at least substantially spherical or cylindrical or at least substantially cylindrical.

4. Apparatus for applying a high-frequency alternating electric field to a workpiece (5a, 5b), comprising a high-frequency generator (4) and at least one roller electrode assembly (1) according to one of claims 1 to 3.

5. Apparatus according to claim 4, **characterized by** a counter-electrode assembly (1) which is designed according to at least one of claims 1-3.

6. Apparatus according to one of claims 4 or 5, **characterized in that** the roller electrode assembly (1) or at least one of the roller electrode assemblies (1) is arranged to be actuated to transport the workpiece (5a, 5b) to be processed.

7. Apparatus according to at least one of claims 4 to 6, **characterized by** an apparatus (11) for contactless energy transfer to the at least one roller electrode assembly (1).

8. Apparatus according to at least one of claims 4, 6, or 7, **characterized by** a table as a counter-pressure element.

9. Apparatus according to claim 8, **characterized in that** the roller electrode assembly (1) is guided by an axis system or on a articulated robot.

10. Apparatus according to at least one of claims 4 to 9, **characterized in that** the protective gas is selected from the following group: sulphur hexafluoride or a gas mixture containing sulphur hexafluoride, a fluoronitrile or a gas mixture containing a fluoronitrile; a fluoroketone or a gas mixture containing fluoroketone, carbon dioxide or a gas mixture containing carbon dioxide.

11. Apparatus according to at least one of claims 4 to 10, **characterized in that** the tire (3) has a valve for introducing and/or removing the protective gas.

12. Method for applying a high-frequency electric alternating field to two plastic sections of at least one workpiece (5a, 5b) for joining the sections by plastic high-frequency welding, by means of an apparatus according to at least one of claims 4 to 11, **characterized in that** a force is applied to the at least one workpiece (5a, 5b) to be processed is acted upon with a force by a roller electrode assembly (1) according to one of claims 1 to 3, the frequency of the alternating field lying within an ISM band.

13. Method according to claim 12, **characterized in that** the transmission of the electrical high frequency to the roller electrode assembly (1) or at least to one of the roller electrode assemblies (1) is performed in a contactless manner.

14. Method according to one of claims 12 or 13, **characterized in that** the apparatus applies the force to the at least one workpiece (5a, 5b) in such a way that the protective gas inside the tire (3) is displaced so that the core (2) rests directly on the tire (3) in the center of a pressure zone (13).

## Revendications

1. Agencement de molette-électrode (1) destiné à la sollicitation de deux sections en matière plastique d'au moins une pièce (5a, 5b) par un champ alternatif électrique à haute fréquence afin de relier les sections par soudage par haute fréquence de la matière plastique,
**caractérisé par**
un noyau (2), lequel est au moins partiellement constitué d'un matériau électriquement conducteur et entouré d'un pneumatique (3), lequel peut être rempli d'un gaz protecteur et est constitué d'une matière diélectrique.

2. Agencement de molette-électrode (1) selon la revendication 1, **caractérisé en ce que** la fréquence du champ alternatif se situe dans une bande ISM.

3. Agencement de molette-électrode (1) selon l'une des revendications 1 ou 2, **caractérisé en ce qu'**il se présente sous forme sphérique ou au moins sensiblement sphérique ou se présente sous forme cylindrique ou au moins sensiblement cylindrique.

4. Dispositif de sollicitation d'une pièce (5a, 5b) par un champ alternatif électrique à haute fréquence, comprenant un générateur haute fréquence (4) et au moins un agencement de molette-électrode (1) selon l'une quelconque des revendications 1 à 3.

5. Dispositif selon la revendication 4, **caractérisé par** un agencement de contre-électrode (1), lequel est conçu selon au moins l'une quelconque des revendications 1 à 3.

6. Dispositif selon l'une des revendications 4 ou 5, **caractérisé en ce que** l'agencement de molette-électrode (1) ou l'au moins un des agencements de molettes-électrodes (1) est conçu pour être entraîné afin de transporter la pièce (5a, 5b) à usiner.

7. Dispositif selon au moins l'une quelconque des revendications 4 à 6, **caractérisé par** un dispositif (11) destiné à la transmission sans contact de l'énergie à l'au moins un agencement de molette-électrode (1).

8. Dispositif selon au moins l'une quelconque des revendications 4, 6 ou 7, **caractérisé par** une table comme élément de contre-pression.

9. Dispositif selon la revendication 8, **caractérisé en ce que** l'agencement de molette-électrode (1) est guidé sur un système d'axe ou sur un robot à bras articulé.

10. Dispositif selon au moins l'une quelconque des revendications 4 à 9, **caractérisé en ce que** le gaz protecteur est choisi dans le groupe constitué par : l'hexafluorure de soufre ou un mélange gazeux contenant de l'hexafluorure de soufre, un fluoronitrile ou un mélange gazeux contenant un fluoronitrile ; une fluorocétone ou un mélange gazeux contenant de la fluorocétone, le dioxyde de carbone ou un mélange gazeux contenant du dioxyde de carbone.

11. Dispositif selon au moins l'une quelconque des revendications 4 à 10, **caractérisé en ce que** le pneumatique (3) comporte une valve permettant d'introduire et/ou d'évacuer le gaz protecteur.

12. Procédé destiné à la sollicitation de deux sections en matière plastique d'au moins une pièce (5a, 5b) par un champ alternatif électrique à haute fréquence afin de relier les sections par soudage par haute fréquence de la matière plastique, au moyen d'un dispositif selon au moins l'une quelconque des revendications 4 à 11, **caractérisé en ce que** l'au moins une pièce (5a, 5b) à usiner est sollicitée par une force à l'aide d'un agencement de molette-électrode (1) selon l'une quelconque des revendications 1 à 3, dans lequel la fréquence du champ alternatif se situe dans une bande ISM.

13. Procédé selon la revendication 12, **caractérisé en ce que** la transmission de la haute fréquence électrique à l'agencement de molette-électrode (1) ou à l'au moins un des agencements de molettes-électrodes (1) s'effectue sans contact.

14. Procédé selon l'une des revendications 12 ou 13, **caractérisé en ce que** le dispositif sollicite l'au moins une pièce (5a, 5b) par la force de telle manière que le gaz protecteur à l'intérieur du pneumatique (3) est déplacé de telle sorte que le noyau (2) repose directement sur le pneumatique (3) au milieu d'une zone de pression (13).
